(19)

Europäisches Patentamt
European Patent Office
Office européen des brevets

(11) **EP 1 962 272 A1**

(12) **EUROPEAN PATENT APPLICATION**

(43) Date of publication:
    **27.08.2008 Bulletin 2008/35**

(51) Int Cl.:
    **G09G 5/10** (2006.01)

(21) Application number: **08151810.2**

(22) Date of filing: **22.02.2008**

(84) Designated Contracting States:
    **AT BE BG CH CY CZ DE DK EE ES FI FR GB GR HR HU IE IS IT LI LT LU LV MC MT NL NO PL PT RO SE SI SK TR**
    Designated Extension States:
    **AL BA MK RS**

(30) Priority: **23.02.2007 KR 20070018704**

(71) Applicant: **Samsung SDI Co., Ltd.**
    **Suwon-si**
    **Gyeonggi-do (KR)**

(72) Inventors:
    • **Kim, Jong-Soo**
      **Gyeonggi-do (KR)**
    • **Song, June-Young**
      **Gyeonggi-do (KR)**

(74) Representative: **Hengelhaupt, Jürgen et al**
    **Anwaltskanzlei**
    **Gulde Hengelhaupt Ziebig & Schneider**
    **Wallstrasse 58/59**
    **10179 Berlin (DE)**

(54) **Power reduction driving controller, organic light emitting display including the same, and associated methods**

(57)    A power reduction driving controller (400) includes an image analyzer (410) adapted to analyze input image data, a scaling factor calculator (420) adapted to generate a scaling factor with respect to the analyzed input image data, and to apply the scaling factor to the input image data to generate a scaled-down image data, and an intensity rescaling unit (430) adapted to reduce an overall intensity level of the input image data.

FIG. 3

EP 1 962 272 A1

**Description**

BACKGROUND OF THE INVENTION

1. Field of the Invention

Embodiments of the present invention relate to an organic light emitting display. More particularly, embodiments of the present invention relate to a power reduction driving controller capable of reducing power consumption, an organic light emitting display including the same, and associated methods.

2. Description of the Related Art

Flat panel displays, e.g., liquid crystal displays (LCD), field emission displays (FED), plasma display panels (PDP), organic light emitting (OLED) displays, and so forth, may be advantageous in having reduced weight and volume, small thickness, and excellent color reproducibility, as compared to cathode ray tube (CRT) displays. Accordingly, such flat panel displays may be used in, e.g., personal digital assistants (PDAs), MP3 players, digital still cameras (DSCs), portable phones, and so forth.

The conventional organic light emitting display may include an organic light emitting diode between electrodes, so that application of voltage to the electrodes may cause re-combination of electrons and holes in the organic light emitting diode, thereby emitting light to form images. Emission of light from the organic light emitting diode may be controlled by an amount of current therethrough. For example, emission of bright light by the organic light emitting diode may require a relatively large amount of current therethrough.

However, use of a large amount of current through the organic light emitting diode may trigger high power consumption by the organic light emitting display.

Further, reduction of power consumption of the organic light emitting display, while using high current through the organic light emitting diode, may require decrease of a drive voltage of an image, thereby distorting display quality thereof, e.g., an undesirable portion of the image may become dark.

**SUMMARY OF THE INVENTION**

Embodiments of the present invention are therefore directed to a power reduction driving controller, organic light emitting display, and methods, which substantially overcome one or more of the disadvantages of the related art.

It is therefore a feature of an embodiment of the present invention to provide a power reduction driving controller capable of regenerating an input image data as a low power image having minimized degradation recognition.

It is therefore another feature of an embodiment of the present invention to provide an organic light emitting display with a power reduction driving controller capable of regenerating an input image data as a low power image having minimized degradation recognition.

It is yet another feature of an embodiment of the present invention to provide a method of scaling down an input image data to generate a low power image having minimized degradation recognition.

At least one of the above and other features and advantages of the present invention may be realized by providing a power reduction driving controller, including an image analyzer adapted to analyze input image data, a scaling factor calculator adapted to generate a scaling factor with respect to the analyzed input image data, and to apply the scaling factor to the input image data to generate a scaled-down image data, and an intensity rescaling unit adapted to reduce an overall intensity level of the input image data.

The scaling factor calculator may include a parameter table having a plurality of conversion parameters. The power reduction driving controller may further include a selector adapted to determine transmittance of an output of the intensity rescaling unit to an output of the power reduction driving controller. The image analyzer may be adapted to control the selector. The image analyzer may be adapted to analyze the input image data to generate a luminance histogram. The intensity rescaling unit may be adapted to receive the luminance histogram and to rescale a total intensity of the input image data based on a distribution pattern of the luminance histogram. The scaling factor calculator may be adapted to receive the luminance histogram and to calculate conversion attenuation factors with respect to the luminance histogram.

The conversion attenuation factors may include one or more of a local attenuation factor, a zonal attenuation factor, a temporal attenuation factor, and/or a luminance attenuation factor. The scaling factor calculator may be adapted to obtain one or more of gradient magnitudes of pixels in the input image data, spatial locations of the pixels in the input image data, speed between frames of the pixels in the input image data, and/or luminance level of the pixels in the input image data to calculate the local attenuation factor, zonal attenuation factor, temporal attenuation factor, and luminance attenuation factor, respectively. The scaling factor may be a product of the local attenuation factor, zonal attenuation factor, temporal attenuation factor, and luminance attenuation factor. The scaling factor calculator may be adapted to obtain the gradient magnitude of pixels in the input image data, the gradient magnitude including high frequency components of the analyzed input image data. The scaling factor calculator may be adapted to obtain the spatial location of the pixels, the spatial location including coordinate values of x and y for each pixel. The scaling factor calculator may be adapted to obtain the speed between frames of pixels, the speed between frames including compared values of two moving continuous frames.

At least one of the above and other features and advantages of the present invention may be also realized by providing an organic light emitting display, including a display panel having a plurality of intersecting scan and data lines, a scan driver adapted to generate and apply selection signals to the scan lines, a data driver adapted to generate and apply data signals to the data lines, and a power reduction driving controller adapted to scale-down image data signals applied to the data driver, the power reduction driver including, an image analyzer adapted to analyze input image data, a scaling factor calculator adapted to generate a scaling factor with respect to the analyzed input image data, and to apply the scaling factor to the input image data to generate a scaled-down image data, and an intensity rescaling unit adapted to reduce an overall intensity level of the input image data.

The scaling factor calculator may include a parameter table with a plurality of conversion parameters. The organic light emitting display may further include a selector adapted to determine transmittance of an output of the intensity rescaling unit to an output of the power reduction driving controller. The image analyzer may be adapted to extract luminance components from the input image data to generate a histogram. The power reduction driving controller may be adapted to transmit the histogram from the image analyzer to the intensity scaling unit and to the scaling factor calculator. The intensity rescaling unit may be adapted to rescale a total intensity of the input image data based on a distribution pattern of the histogram, and the scaling factor calculator may be adapted to calculate the scaling factor based on the histogram.

At least one of the above and other features and advantages of the present invention may be further realized by providing a method of scaling down image data input into a data driver of an organic light emitting display, including analyzing input image data via an image analyzer, generating a scaling factor with respect to the analyzed input image data, applying the scaling factor to the input image data to generate a scaled-down image data, and reducing an overall intensity level of the input image data.

Preferably, the scaling factor is calculated using a parameter table including a plurality of conversion parameters. Preferably, the image analyzer analyzes the input image data to generate a luminance histogram. The luminance histogram may be input to an intensity rescale unit and/or to a scaling factor calculator. Preferably, the intensity rescaling unit rescales a total intensity of the input image data based on a distribution pattern of the luminance histogram, while the scaling factor calculator calculates conversion attenuation factors in accordance with the luminance histogram. The conversion attenuation factors may include one or more of a local attenuation factor, a zonal attenuation factor, a temporal attenuation factor, and/or a luminance attenuation factor. Preferably, the scaling factor calculator calculates one or more of gradient magnitudes of pixels in the input image data, spatial locations of the pixels in the input image data, speed between frames of the pixels in the input image data, and/or luminance level of the pixels in the input image data to calculate the local attenuation factor, zonal attenuation factor, temporal attenuation factor, and luminance attenuation factor, respectively.

Preferably, the scaling factor is a product of the local attenuation factor, zonal attenuation factor, temporal attenuation factor, and luminance attenuation factor.

The scaling factor calculator may obtain the gradient magnitudes of pixels in the input image data, the gradient magnitudes including high frequency components of the analyzed input image data. The scaling factor calculator may obtain the spatial location of the pixels, the spatial location including coordinate values of x and y for each pixel. The scaling factor calculator may obtain the speed between frames of pixels, the speed between frames including compared values of two moving continuous frames.

## BRIEF DESCRIPTION OF THE DRAWINGS

The above and other features and advantages of the present invention will become more apparent to those of ordinary skill in the art by describing in detail exemplary embodiments thereof with reference to the attached drawings, in which:

FIG. 1 illustrates a schematic block diagram of an organic light emitting display according to an embodiment of the present invention;
FIG. 2 illustrates a schematic block diagram of a power reduction driving controller according to an embodiment of the present invention;
FIG. 3 illustrates a flow chart of an operation of the power reduction driving controller of FIG. 2;
FIG. 4 illustrates a schematic view of an operation of the image analyzer of the power reduction driving controller of FIG. 2; and

FIGS. 5A-5D illustrate graphs of scaling ratios with respect to gradient magnitude, pixel locations, speed between frames, and luminance, respectively.

## DETAILED DESCRIPTION OF THE INVENTION

Embodiments of the present invention will now be described more fully hereinafter with reference to the accompanying drawings, in which exemplary embodiments of the invention are illustrated. Aspects of the invention may, however, be embodied in different forms and should not be construed as limited to the embodiments set forth herein. Rather, these embodiments are provided so that this disclosure will be thorough and complete, and will fully convey the scope of the invention to those skilled in the art.

In the figures, the dimensions of layers and regions may be exaggerated for clarity of illustration. It will also be understood that when a layer or element is referred to as being "on" another layer or element, it can be directly on the other layer or element, or intervening layers or elements may also be present. In addition, it will also be understood that when an element is referred to as being "between" two elements, it can be the only element between the two elements, or one or more intervening elements may also be present. Like reference numerals refer to like elements throughout.

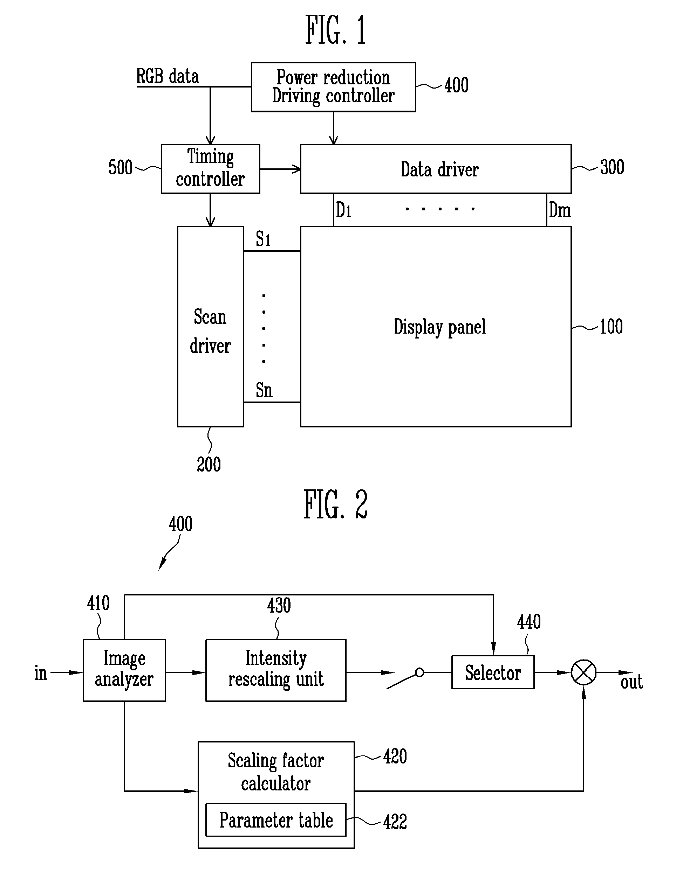

FIG. 1 illustrates a schematic block diagram of an organic light emitting display according to an embodiment of the present invention. Referring to FIG. 1, the organic light emitting display may include a display panel 100, a scan driver 200, a data driver 300, a power reduction driving controller 400, and a timing controller 500.

The display panel 100 may include a plurality of data lines D 1 to Dm arranged in a first direction, e.g., form a plurality of rows along a horizontal direction, a plurality of scan lines S1 to Sn arranged in a second direction, e.g., form a plurality of columns along a vertical direction, and a plurality of pixels (not shown) at intersections of the scan lines S1 to Sn and the data lines D1 to Dm. The data lines D1 to Dm may transfer data signals, e.g., image signals, to the pixels, and the scan lines S1 to Sn may transfer selection signal to the pixels. Each pixel may be formed in a pixel region, e.g., a region defined by two adjacent data lines D1 to Dm and two adjacent scan lines S1 to Sn, and may be connected to one data line Dm and to one scan line Sn. Each pixel may include a switching transistor, a drive transistor, and an organic light emitting diode. A cathode of the organic light emitting diode may be coupled to a power source (not shown), e.g., a ground voltage, so that light may be emitted from the organic light emitting diode with respect to an electric current applied thereto through the drive transistor.

The scan driver 200 of the organic light emitting display may receive scan control signals, e.g., start signals, clock signals, and so forth, from the timing controller 500. The scan driver 200 may generate selection signals according to the received scan control signals, and may apply the selection signals to respective scan lines S1 to Sn to select predetermined pixels to be operated.

The data driver 300 of the organic light emitting display may receive data control signals, e.g., start signals, clock signals, and so forth, from the timing controller 500, and may receive image data signals from the power reduction driving controller 400. The data driver 300 may generate data voltage signals corresponding to the image data signals, and may apply the data voltage signals to respective data lines D1 to Dm according to the data control signals. The image data signals received from the power reduction driving controller 400 may include scaled-down image data, i.e., a data image scaled-down via a scaling factor, thereby reducing power consumption, as will be explained in more detail below with reference to FIGS. 2-5D.

The power reduction driving controller 400 of the organic light emitting display may receive an input image data, e.g., RGB data, and may generate a scaling factor specific for the input image data. The scaling factor may be applied to the input image data to form a scaled-down image data to be transferred to the data driver 300. In other words, the input image data may not be transferred in its original form to the data driver 300, but may be regenerated in a scaled-down form with respect to the scaling factor. The scaled-down image data may require lower power consumption, and may exhibit lower quality degradation recognition, thereby avoiding distortion of display quality, e.g., prevent or substantially minimize darkening of undesirable portions of an image.

FIGS. 2-4 illustrate a detailed schematic block diagram of the power reduction driving controller 400 and its operation. Referring to FIG. 2, the power reduction driving controller 400 may include an image analyzer 410 for analyzing the input image data, a scaling factor calculator 420 for generating a scaling factor with respect to the input data image and for producing a scaled-down image data, and an intensity rescaling unit 430 for adjusting an overall intensity level of the input image data. An output of the scaling factor calculator 420 and/or of the intensity rescaling unit 430 may be output from the power reduction driving controller 400 to the data driver 300 as the image data signal.

The image analyzer 410 of the power reduction driving controller 400 may receive and analyze the input image data in terms of type and properties. More specifically, the image analyzer 410 may receive the input image data, and may extract luminance components thereof to generate histograms. Luminance components may be extracted from the input image data according to Equation 1 below,

$$Y = MAX(R, G, B) \qquad \text{Equation 1}$$

where Y indicates luminance, R, G, and B indicate red, green, and blue subpixels, respectively, and MAX indicates a maximum luminance value. For example, the image analyzer 410 may extract maximum levels of luminance of each of R, G, and B sub pixels of each pixel in the input image data, and may generate a histogram, e.g., a luminance histogram, illustrating brightness and color distribution within the input data image.

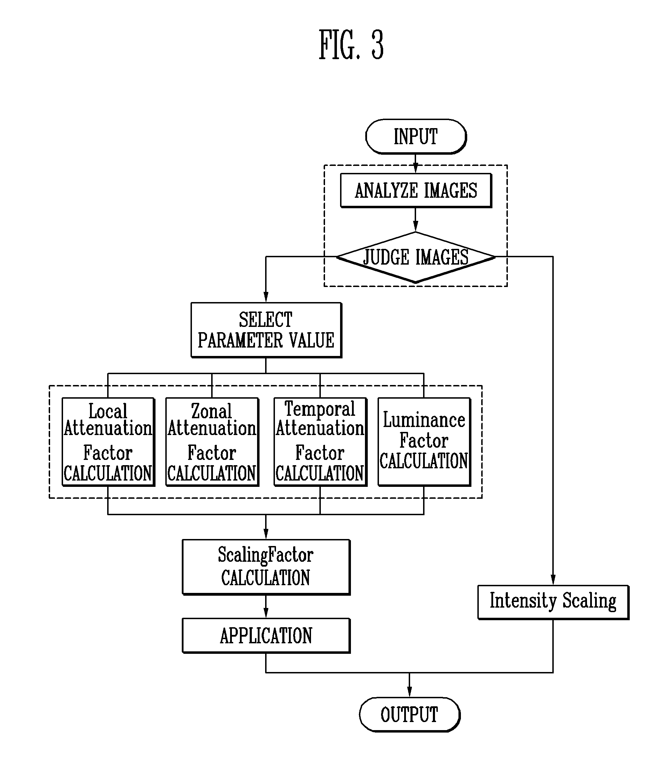

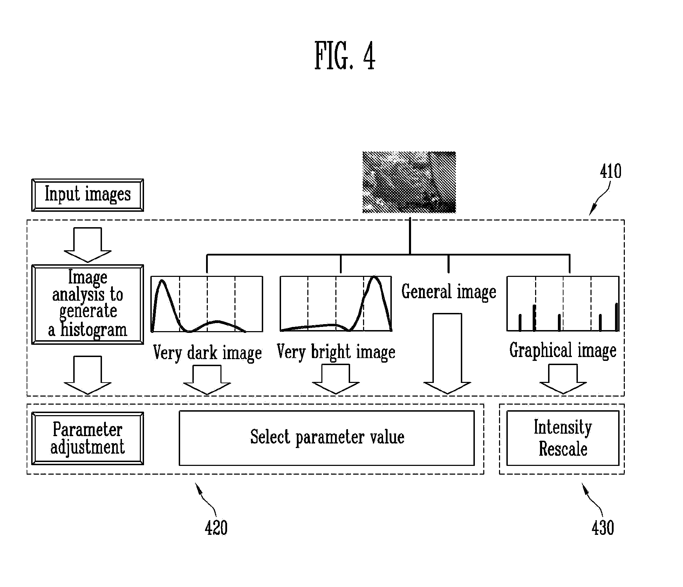

Image data may be calculated according to the luminance histogram, as, e.g., a very dark image, a very bright image, a general image, and/or a graphical image, as illustrated in FIG. 4. The image data may be transmitted to the scaling factor calculator 420 and/or to the intensity rescaling unit 430. In accordance with image classification, when the image is judged to be one of a very dark image, a very bright image, or a general image, the image data may be transmitted to the scaling factor calculator 420 in order to select parameter values, as indicated in FIG. 3. As illustrated in more detail in FIG. 3, the scaling factor calculator may calculate attenuation factors, calculate a scaling factor, and apply the scaling factor to the image data. When the image data is judged to be a graphical image, the image data may be transmitted to the intensity rescaling unit 430, as illustrated in FIGS. 2 and 4, in order to scale the intensity of the image data, as indicated in FIG. 3.

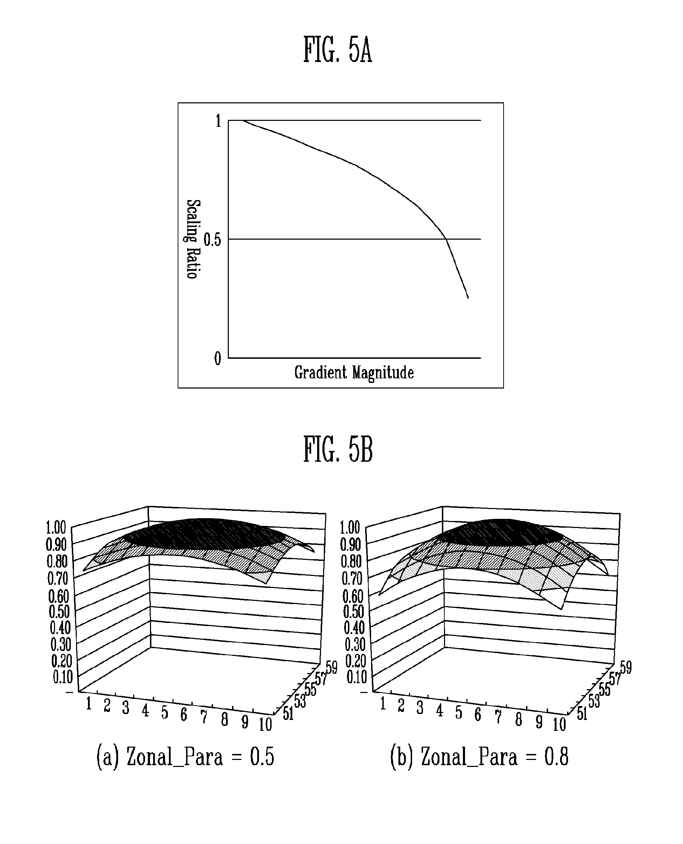

The scaling factor calculator 420 of the power reduction driving controller 400 may receive the image data from the image analyzer 410, and may generate a scaling factor with respect to the image data in accordance with its data in the histogram, e.g., luminance components of the input image data, and with respect to conversion parameters in a parameter table 422 of the scaling factor calculator 420. The parameter table 422, e.g., Table 1 below, may include a plurality of conversion parameters, i.e., local, zonal, temporal, and/or gamma parameters, determined according to experimentation and corresponding to the histogram data received from the image analyzer 410. The conversion parameters in the parameter table 422 may be adjusted with respect to a type of display device. Determination of the scaling factor with respect to the histogram data received from the image analyzer 410 and with respect to the parameter table 422 will be discussed in more detail below with reference to FIGS. 5A-5D.

Table 1

| Parameter | General image | Very dark image | Very bright image |
|---|---|---|---|
| Local_Para | 1.3 | 1.3 | 1.3 |
| Zonal_Para | 0.6 | 0.4 | 0.6 |
| Temporal_Para | 1.1 | 1.1 | 1.1 |
| Gamma_Para | 1.3 | 1.1 | 1.1 |

The intensity rescaling unit 430 of the power reduction driving controller 400 may receive the histogram data from the image analyzer 410, and may rescale intensity of the input image data accordingly. For example, the intensity rescaling unit 430 may receive the graphic image from the image analyzer 410, as illustrated in FIG. 4, and may reduce an overall luminance, i.e., reduce intensity of each pixel, thereof with respect to the luminance distribution pattern in the histogram.

The power reduction driving controller 400 may further include a selector 440. The selector 440 may control transmittance of an output value of the intensity rescaling unit 430, i.e., an input image data with rescaled intensity. For example, the selector 440 may control output of the intensity rescaling unit 430, e.g., operate a relay between the intensity rescaling unit 430 and an output of the power reduction driving controller 400, so that the input image data with rescaled intensity may be blocked or transmitted as an output of the power reduction driving controller 400. The selector 440 may be controlled by the image analyzer 410 with respect to a type of the input image data.

Operation of the power reduction driving controller 400 will be described in more detail below. Referring to FIG. 4, the image analyzer 410 may analyze the input data image according to luminance features thereof. For example, as illustrated in FIG. 4, the image analyzer 410 may generate a histogram representing whether the input image data is a very dark image, a very bright image, a general image, and/or a graphic image. As further illustrated in FIG. 4, a histogram of a graphic image, e.g., data such as games, maps, and/or texts, may include a relatively large number of bins, i.e., columns representing intensities of pixels, so the graphic image may be transferred to the intensity rescaling unit 430 to reduce an overall intensity level thereof via adjustment of pixel intensity. The remaining image types, i.e., the very dark image, the very bright image, and the general image, may be transferred to the scaling factor calculator 420 to determine conversion parameters from the parameter table 422 and respective attenuation factors. The graphic image may be scaled via the intensity rescaling unit 430, instead of the scaling factor calculator 420, because extraction of luminance features from a graphic images for calculating a corresponding scaling factor may be complex, and may result in an inadequate minimized image data.

Determination of conversion parameters and respective attenuation factors may be determined according to luminance features in the histogram data, as will be explained in more detail below with reference to FIGS. 3 and 5A-5D. Image data received from the image analyzer 410 may be analyzed to extract luminance features, such as data regarding gradient magnitude of a pixel corresponding to input image data, i.e., a rapid occurrence degree of a brightness difference, spatial location of the pixel, speed between frames of the pixel, and luminance level of the pixel. Each extracted luminance feature may be used in conjunction with a corresponding conversion parameter to generate a respective attenuation factor. The respective attenuation factors may be used to generate the scaling factor. The scaling factor may be applied to the input image data to generate the scaled-down data image data to be output to the data driver 300

More specifically, data regarding gradient magnitude of a pixel corresponding to input image data, i.e., a local attenuation parameter, may be obtained by extracting high frequency intensity component of the input image data, followed by normalization. For example, the high frequency components may be determined as a difference between $I_{(x,y)}$, i.e., an intensity of a pixel in the input image data, and $LPF_{(x,y)}$, i.e., an intensity of a pixel after low-pass filtering. The high frequency component may be normalized via use of a local_para parameter from the parameter table 422, e.g., 1.3 from Table 1, to generate a local attenuation factor having a value on a scale between 0-1. An intensity of the input image data may be adjusted for each pixel by multiplying the intensity of the input data image by the local attenuation factor, as illustrated in Equation 2 below, where $I'_{(x,y)}$ refers to the adjusted intensity value, and local_para refers to a parameter from the parameter table 422 having a predetermined constant value.

$$I'_{(x,y)} = \frac{(I_{(x,y)} - LPF_{(x,y)})^{local\_para}}{I_{(x,y)} - LPF_{(x,y)}} \cdot I_{(x,y)} \qquad \text{Equation 2}$$

As illustrated in FIG. 5A, a high local attenuation factor corresponds to low gradient magnitude, i.e., a high frequency component having a low value. Accordingly, when the input image data has an increased high frequency component, i.e., high gradient magnitude, its corresponding local attenuation factor is reduced to increase a reduction degree.

Data regarding a spatial location of each pixel, i.e., a spatial attenuation parameter, may be obtained by extracting x and y coordinates for each pixel in the input image data by the image analyzer 410. For example, a left upper corner of the display panel 100 may have a coordinate value of [x, y] = [0, 0], and a right lower corner of the display panel 100 may have a coordinate value of [x, y] = [$x_1$, $y_1$], where $x_1$ may indicate a width of an image, and $y_1$ may indicate a height of an image. The coordinates of each pixel may be used with a zonal_para parameter from the parameter table 422, e.g., 0.6 from Table 1 for a general image, to generate a zonal attenuation factor having a value on a scale between 0-1. An intensity of the input image data may be adjusted for each pixel by multiplying the intensity of the input data image by the zonal attenuation factor, as illustrated in Equation 3 below, where $x_1$ and $y_1$ refer to width and height of an image, respectively, and zonal_para refers to a parameter from the parameter table 422 having a predetermined constant value. The zonal attenuation factor may be obtained by approximated Gaussian function.

$$I'_{(x,y)} = [1 - \{Zonal\_Para \cdot \frac{(x - \frac{1}{2} \cdot x_1)^2 + (y - \frac{1}{2} \cdot y_1)^2}{x_1 \cdot y_1}\}] \cdot I_{(x,y)} \qquad \text{Equation 3}$$

The zonal attenuation factors of peripheral pixels in the pixel unit 100 may be lower as compared to zonal attenuation factors of central pixels of the pixel unit 100, so intensity in the peripheral pixels may be reduced more than intensity in the central pixels. For example, as illustrated in FIG. 5B, a mapped input image data according to x and y coordinates may have adjusted intensity levels along the z-axis, i.e., zonal attenuation factor. As illustrated in graphs (a) and (b) of FIG. 5B, a center of an image may have an adjusted intensity value substantially equal to the input intensity value, i.e., the zonal attenuation factor may be substantially 1. However, as further illustrated in graphs (a) and (b) of FIG. 5B, peripheral portions of the image may have zonal attenuation factors of about 0.5 or about 0.8, respectively, with an increasing zonal_para further reducing intensities.

Data regarding speed between frames of a pixel corresponding to the input image data, i.e., a temporal attenuation parameter, may be obtained by comparing pixel intensities of two continuous frames, where a frame having a greater pixel intensity value may be regarded as a faster frame (a frame having greater movement). For example, Diff, i.e., a difference between pixel intensities of frames, may be calculated according to Equation 4 below, where $I^n$ indicates a current frame and $I^{n-1}$ indicates a previous frame. A pixel in a sub-window of 5×5 may be used as an example.

$$Diff = \frac{\sum_{i}^{5x5} I_i^{n-1}}{\sum_{i}^{5x5} I_i^{n}} - 1 \qquad \text{Equation 4}$$

The difference between pixel intensities of frames, i.e., Diff, may be normalized to provide a temporal attenuation factor having a value between 0 and 1. For example, when an extracted value Diff is less than zero, the intensity of the pixel may be multiplied by (-1), and when an extracted value Diff is greater than 1, the intensity of the pixel may be cut-off at 1 to provide a value between 0-1. In other words, Diff may be normalized via use of a temporal_para parameter from the parameter table 422, e.g., 1.1 from Table 1, to generate a temporal attenuation factor having a value on a scale between 0-1. The intensity of the input data image may be adjusted for each pixel by multiplying the intensity of the input data image by the temporal attenuation factor, as illustrated in Equation 5 below, where refers a parameter from the parameter table 422 having a predetermined constant value.

$$I'_{(x,y)} = \frac{Diff^{temporal\_Para}}{Diff} \cdot I_{(x,y)} \qquad \text{Equation 5}$$

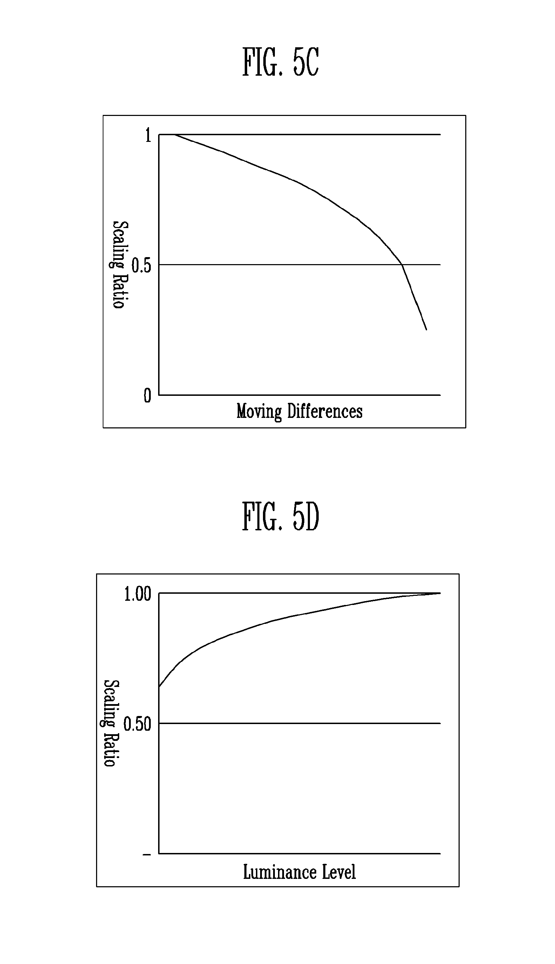

When the difference between the pixel frames is large, the temporal attenuation factor may be low to increase a reduction degree of the input image data, as illustrated in FIG. 5C. For example, a reduction degree of the input image data may be increased at a boundary between a rapidly moving image and a slow moving image.

Data regarding luminance of a pixel corresponding to the input image data, i.e., a gamma attenuation parameter, may be obtained by determining light emission intensity of the input image data. When the intensity level of the pixel is low, a luminance factor may increase a reduction degree of a signal level. For example, as illustrated in FIG. 5D, a pixel of a bright region may have a compressed intensity (intensity which data is compressed) that is lower than that of a pixel of a dark region. The luminance factor and a corresponding adjusted intensity may be obtained according to Equations 6-7 below, respectively.

$$LumiFactor = \frac{I_{(x,y)}^{temporal\_Para}}{I_{(x,y)}} \qquad \text{Equation 6}$$

$$I'_{(x,y)} = I_{(x,y)}^{temporal\_Para} \qquad \text{Equation 7}$$

When all the luminance features are extracted from the input image data and the corresponding conversion factors are obtained to generate corresponding attenuation factors, a final scaling factor may be calculated as a product of the attenuation factors, i.e., local attenuation factor, zonal attenuation factor, temporal attenuation factor, and luminance attenuation factor. The final scaling factor may be applied to the input image data to adjust its luminance features to form a scaled-down image data. The scaled-down image data may have low power consumption, and may exhibit minimized image quality degradation recognition. In other words, the scaled-down image data may be transmitted via a signal having a reduced magnitude as compared to a signal of the input image data, so any degraded quality may not be recognized. Accordingly, reduction of power consumption of the organic light emitting display may be achieved without significantly affecting image quality.

The organic light emitting display according to embodiments of the present invention may be advantageous in reducing power consumption thereof, while substantially minimizing or preventing deterioration of image quality. More specifically, the input image data signal may be scaled down, so image quality degradation may not be recognized despite reduction of power consumption. Accordingly, the display effect at low power consumption may be maximized.

Exemplary embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

**Claims**

1. A power reduction driving controller, comprising:

   an image analyzer (410) adapted to analyze input image data;
   a scaling factor calculator (420) adapted to generate a scaling factor with respect to the analyzed input image data, and to apply the scaling factor to the input image data to generate a scaled-down image data; and
   an intensity rescaling unit (430) adapted to reduce an overall intensity level of the input image data.

2. The power reduction driving controller as claimed in claim 1, wherein the scaling factor calculator (420) includes a parameter table (422) having a plurality of conversion parameters.

3. The power reduction driving controller as claimed in one of claims 1 and 2, further comprising a selector (440), the selector (440) being adapted to determine transmittance of an output of the intensity rescaling unit (430) to an output of the power reduction driving controller (400).

4. The power reduction driving controller as claimed in claim 3, wherein the image analyzer (410) is adapted to control the selector (440).

5. The power reduction driving controller as claimed in one of the preceding claims, wherein the image analyzer (410) is adapted to analyze the input image data to generate a luminance histogram.

6. The power reduction driving controller as claimed in claim 5, wherein the intensity rescaling unit (430) is adapted to receive the luminance histogram and to rescale a total intensity of the input image data based on a distribution pattern of the luminance histogram.

7. The power reduction driving controller as claimed in claim 5, wherein the scaling factor calculator (420) is adapted to receive the luminance histogram and to calculate conversion attenuation factors in accordance with the luminance histogram.

8. The power reduction driving controller as claimed in claim 7, wherein the conversion attenuation factors include one or more of a local attenuation factor, a zonal attenuation factor, a temporal attenuation factor, and/or a luminance attenuation factor.

9. The power reduction driving controller as claimed in claim 8, wherein the scaling factor calculator (420) is adapted to obtain one or more of gradient magnitudes of pixels in the input image data, spatial locations of the pixels in the input image data, speed between frames of the pixels in the input image data, and/or luminance level of the pixels in the input image data to calculate the local attenuation factor, zonal attenuation factor, temporal attenuation factor, and luminance attenuation factor, respectively.

10. The power reduction driving controller as claimed in one of claims 8 and 9, wherein the scaling factor is a product of the local attenuation factor, zonal attenuation factor, temporal attenuation factor, and luminance attenuation factor.

11. The power reduction driving controller as claimed in one of claims 8-10, wherein the scaling factor calculator (420) is adapted to obtain the gradient magnitudes of pixels in the input image data, the gradient magnitudes including high frequency components of the analyzed input image data.

**12.** The power reduction driving controller as claimed in one of claims 8-11, wherein the scaling factor calculator (420) is adapted to obtain the spatial location of the pixels, the spatial location including coordinate values of x and y for each pixel.

**13.** The power reduction driving controller as claimed in one of claims 8-12, wherein the scaling factor calculator (420) is adapted to obtain the speed between frames of pixels, the speed between frames including compared values of two moving continuous frames.

**14.** An organic light emitting display, comprising:

a display panel (100) including a plurality of intersecting scan lines (S1, Sn) and data lines (D1, Dm);
a scan driver (200) adapted to generate and apply selection signals to the scan lines (S1, Sn);
a data driver (300) adapted to generate and apply data signals to the data lines (D1, Dm); and
a power reduction driving controller (400) according to one of claims 1 through 13 for scaling-down image data signals applied to the data driver (300).

**15.** A method of scaling down image data input into a data driver (300) of an organic light emitting display, comprising:

analyzing input image data via an image analyzer (410);
generating a scaling factor with respect to the analyzed input image data;
applying the scaling factor to the input image data to generate a scaled-down image data; and
reducing an overall intensity level of the input image data.

## FIG. 1

RGB data ——— Power reduction Driving controller ~ 400

500 ~ Timing controller → Data driver ~ 300

D1 · · · · · Dm

S1

Scan driver

S·
·
·
·

Sn

Display panel ~ 100

200

## FIG. 2

400

410 430 440

in → Image analyzer → Intensity rescaling unit → ○ Selector → ⊗ → out

Scaling factor calculator ~ 420

Parameter table ~ 422

# FIG. 3

# FIG. 4

## FIG. 5A

## FIG. 5B

(a) Zonal_Para = 0.5        (b) Zonal_Para = 0.8

# FIG. 5C

# FIG. 5D

# EP 1 962 272 A1

**European Patent Office**

**EUROPEAN SEARCH REPORT**

Application Number

EP 08 15 1810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/090488 A1 (YOO HYO-NAM [KR]) 15 May 2003 (2003-05-15) * abstract * * figures 3,4 * * paragraphs [0024] - [0032] * | 1,2,15 | INV. G09G5/10 |
| X | EP 1 308 921 A (EASTMAN KODAK CO [US]) 7 May 2003 (2003-05-07) * paragraphs [0001], [0009] - [0013]; figures 1,4 * | 1,5,6, 14,15 | |
| X | US 2002/057234 A1 (ISHIZUKA SHINICHI [JP] ET AL) 16 May 2002 (2002-05-16) * paragraphs [0002], [0007], [0008], [0019], [0023] - [0028]; figures 2,4 * | 1,14,15 | |
| P,X | EP 1 870 878 A (SAMSUNG ELECTRONICS CO LTD [KR]) 26 December 2007 (2007-12-26) * abstract * * figures 7,14 * * paragraphs [0027] - [0060] * | 1-13,15 | |
| | | | TECHNICAL FIELDS SEARCHED (IPC) |
| | | | G09G G06T G06F |

The present search report has been drawn up for all claims

| Place of search | Date of completion of the search | Examiner |
|---|---|---|
| Munich | 23 May 2008 | Adarska, Veneta |

EPO FORM 1503 03.82 (P04C01)

**ANNEX TO THE EUROPEAN SEARCH REPORT
ON EUROPEAN PATENT APPLICATION NO.**

EP 08 15 1810

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2008

| Patent document cited in search report | | Publication date | Patent family member(s) | | Publication date |
|---|---|---|---|---|---|
| US 2003090488 | A1 | 15-05-2003 | CN | 1419373 A | 21-05-2003 |
| | | | KR | 20030039704 A | 22-05-2003 |
| EP 1308921 | A | 07-05-2003 | JP | 2003216092 A | 30-07-2003 |
| | | | KR | 20030038398 A | 16-05-2003 |
| | | | TW | 575856 B | 11-02-2004 |
| | | | US | 2003080967 A1 | 01-05-2003 |
| US 2002057234 | A1 | 16-05-2002 | JP | 2002116732 A | 19-04-2002 |
| EP 1870878 | A | 26-12-2007 | CN | 101093635 A | 26-12-2007 |
| | | | JP | 2008003590 A | 10-01-2008 |

EPO FORM P0459

For more details about this annex : see Official Journal of the European Patent Office, No. 12/82